# EUROPÄISCHE PATENTSCHRIFT

(11) **EP 2 668 763 B1**
(45) Veröffentlichungstag und Bekanntmachung des Hinweises auf die Patenterteilung: **06.12.2017**
(21) Anmeldenummer: 12718562.7
(22) Anmeldetag: 26.01.2012
(51) Int. Cl.: H04L 29/06

(54) **SCHALTUNGSANORDNUNG FÜR VERBINDUNGSSCHNITTSTELLE**
CIRCUIT ARRANGEMENT FOR CONNECTION INTERFACE
ENSEMBLE CIRCUIT POUR INTERFACE DE LIAISON

(30) Priorität: 26.01.2011 DE 102011009518
(43) Veröffentlichungstag der Anmeldung: 04.12.2013
(73) Patentinhaber: Ruprecht-Karls-Universität Heidelberg, 69117 Heidelberg (DE)
(72) Erfinder: NÜSSLE, Mondrian, 68165 Mannheim (DE); LITZ, Heiner, 94025 California (US); GEIB, Benjamin, 1181 MK Amstelveen (NL)
(74) Vertreter: Vossius & Partner Patentanwälte Rechtsanwälte mbB
(86) Internationale Anmeldenummer: PCT/DE2012/000060
(87) Internationale Veröffentlichungsnummer: WO 2012/100769

(56) Entgegenhaltungen:
- WO-A1-2010/105013
- US-B1- 6 510 509

## Beschreibung

Die vorliegende Erfindung betrifft das oberbegrifflich Beanspruchte und bezieht sich somit insbesondere auf die Verbindung von Computern eines Clusters.

Komplexe Rechenaufgaben werden heute zum Teil auf sogenannten "Computerclustern" abgearbeitet, das heißt, untereinander Daten austauschenden Computern, die gemeinsam Berechnungen anstellen.

Die Geschwindigkeit, mit der dabei Rechenergebnisse generiert werden können, hängt nicht nur von der Anzahl der im Cluster zur Verfügung stehenden Rechnereinheiten wie PCs, Serverblades und dergleichen sowie deren Geschwindigkeit ab, sondern auch davon, wie effizient die einzelnen Einheiten Daten untereinander austauschen können, weil häufig Teilergebnisse aus einer Einheit zur Weiterverarbeitung in einer anderen Einheit benötigt werden. Die Übertragung von Daten soll dabei schnell und effizient erfolgen. Eine schnelle Übertragung erfordert zunächst, dass Daten möglichst bald nach dem Senden beziehungsweise nach der Anforderung der Daten zur Verfügung stehen, was zum einen geringe Verzögerungszeiten (Latenz) erfordert und andererseits eine gute Ausnutzung der zur Verfügung stehenden Bandbreite. Die gute Ausnutzung der zur Verfügung stehenden Bandbreite bedeutet im Regelfall, dass den tatsächlich zu übertragenden Daten nur wenig Kontrolldaten, Steuerdaten usw. als "Overhead" hinzugefügt werden sollen.

Neben den tatsächlich benötigten Daten wie etwa den zu übertragenden Operanden, Teilergebnissen usw. sind bei der Kommunikation in Clustern weitere Informationen notwendig. So wird den Daten zum Beispiel typisch Information beigefügt, welche die Zieladresse, einen bestimmten Prozess auf dem Zielrechner, typisch charakterisiert durch die sogenannte Prozess-Identifikation (Process ID), angibt, sowie Informationen über die Länge einer Nachricht, weiter bevorzugt eine eindeutige Identifikation für die Nachricht, Angaben über die Art der Nachricht usw. Diese entsprechenden Zusatzinformationen werden den eigentlichen "Nutzlast"-Daten beim Senden hinzugefügt, mit diesen in einem Datenpaket übertragen und im Empfänger unter anderem verwendet, um das jeweilige Datenpaket zu identifizieren und korrekt dem jeweiligen Prozess, der auf der Zielrechnereinheit läuft, zuzuordnen. Um ein Datenpaket einem bestimmten Prozess auf einer Zielrechner-Einheit zuzuordnen, wird typisch ein Matching-Verfahren ausgeführt, in welchem abgeglichen wird, ob auf eine bestimmte Nachricht für eine Anwendung gewartet wurde, das heißt ob es auf dem Zielrechner bereits eine entsprechende Empfangsoperation gibt, oder ob eine Nachricht noch nicht erwartet beziehungsweise benötigt wurde. Problematisch ist hierbei unter anderem, dass dieser Abgleich schnell und zuverlässig laufen soll, aber der Abgleich jüngere Anfragen dann nicht berücksichtigen kann, wenn Nachrichten ungefähr zu dem Zeitpunkt eingehen, zu welchem auch die Software entsprechenden Bedarf nach den eingehenden Daten anmeldet. Die entsprechenden Listen können überdies sehr lang sein und mehrere Tausend Einträge aufweisen, was den Vergleichsprozess umfangreich und aufwändig macht. Der Abgleich kann somit einen erheblichen Anteil der Systemleistung erfordern.

Aus der US 2005/0078605 A1 ist ein Verfahren bekannt, um die korrekte Reihenfolge geordneter Datenpakete, die ungeordnet eintreffen, zu gewährleisten. Dazu wird für jede Datenquelle (das heißt jeden Datensender) eine eigene Liste geführt.

Verwiesen sei auch auf die US 2010/0232448 A1.

Aus Keith D. Underwood, Arun Rodrigues und K. S. Hemmert, "Accelerating List Management for MPT" sowie dem Aufsatz derselben Autoren "An Architecture to Perform NIC Based MPI Matching", ISSN 1-4244-1388-5/07, 2007, sind Verfahren und Vorrichtungen bekannt, um ein Matching mit geringerer Latenz durchzuführen. Es wird eine dedizierte Hardware vorgeschlagen, die den Vergleich schneller ausführen soll. Verwiesen wird auch auf Keith D. Underwood et al, "A Hardware Acceleration Unit for MPI Queue Processing", Proceedings of the 19th EEE International Parallel and Distributed Processing Symposium (IPDPS'05).

Weiter sei verwiesen auf den Aufsatz *"*An FPGA-based Customer High Performance Interconnection Network" von M. NÜSSLE et al. in IEEE Computer Society, International Conference on Reconfigurable Computing in FPGA's, 2009, Seiten 113-118, ISSN 978-0-7695-3917-1/09.

Es ist häufig erforderlich, Nachrichten bis zu ihrer Identifikation zu puffern und gegebenenfalls umzukopieren, was nicht nur zeitaufwändig ist, sondern wiederum das System belastet und Energie benötigt. Auch wenn lediglich die Header, das heißt die den eigentlichen Daten hinzuzufügenden Informationen übertragen und abgeglichen werden und der tatsächliche Datentransfer erst danach durchgeführt wird, ergibt sich immer noch eine erhebliche Belastung für eine zentrale Prozessoreinheit (CPU) in einer Rechnereinheit.

Die schnelle Verarbeitung erfordert also auch, dass an der Zieleinheit, das heißt dort, wohin die Daten gesendet werden, schnell bestimmt werden kann, was mit den empfangenen Daten geschehen soll. Dies ist vor allen Dingen kritisch, weil einerseits auch in Computerclustern eine Vielzahl von Threads und dergleichen auf den einzelnen Einheiten ablaufen kann und zum anderen überdies für eine gegebene Rechenaufgabe gegebenenfalls von mehreren sendenden Einheiten Daten empfangen werden müssen.

Es ist darüber hinaus wünschenswert, die Datenübertragung mit einem nur geringen Energieaufwand bewirken zu können; dies ist insbesondere in Computerclustern deshalb kritisch, weil hier viele Rechnereinheiten dicht beieinander angeordnet werden und die von diesen erzeugte Wärme - gegebenenfalls durch Investition in teuere Klimaanlagen und dergleichen - abgeführt werden muss.

Es ist wünschenswert, die Datenübertragung in Computerclustern so auszugestalten, dass zumindest ein Teil der erwähnten Probleme eine zumindest partielle Linderung im Vergleich zum vorbekannten Stand der Technik erfährt.

Die Lösung dieser Aufgabe wird in unabhängiger Form beansprucht. Bevorzugte Ausführungsformen finden sich in den Unteransprüchen.

Ein erster Grundgedanke der Erfindung besteht somit darin, dass eingehende Datennachrichten vorhandenen Informationen mit einer Vielzahl von Vergleichselementen zugeordnet werden, denen ein jeweiliger Speicher zugeordnet ist, wobei die Speicher so organisiert sind, dass sie eine gemeinsame Ablage für nichtzugeordnete Nachrichten bilden. Dies ermöglicht einen hochparallelen Zugriff, der als solcher sehr schnell ist und bedingt im Übrigen im Normalbetrieb keine Belastung eines Rechners, der mit der erfindungsgemäßen Verbindungsschnittstelle versehen ist. Indem als Nachrichten nicht vollständige Datenströme abgelegt werden, sondern lediglich darauf bezogene Header usw., das heißt Kennungen, mit denen die Datenströme identifiziert werden können, ist die Menge an Informationen, die für eingehende, nichtzuzuordnende Datennachrichten abzuspeichern sind, sehr gering, was auch den Energieverbrauch senkt. Die Verbindungsschnittstelle wird typisch Teil eines Computers sein, der beispielsweise in einem Computercluster vorgesehen ist. Sie kann aber extern zum Beispiel zum Prozessor oder andern Teilen des PC sein, das heißt als dedizierte Hardware optimiert sein. Als eingehend im Sinne des vorliegenden Textes wird eine Datennachricht verstanden, wenn sie in der Verbindungsschnittstelle eingeht, das heißt entweder von dem zugeordneten Rechner an die Verbindungsschnittstelle gespeist wird, das heißt sich auf eine Empfangsoperation bezieht, oder an dieser von außerhalb empfangen wird. Es kann sich damit um von außen eintreffende Anfragen nach der Entgegennahme von zur Verbindungsschnittstelle zu sendenden Datenströmen handeln, die insoweit unerwartet sind, oder um Anfragen des zugehörigen Computers nach Daten bei fremden Rechnern des Clusters oder dergleichen. Es sei explizit darauf hingewiesen, dass in der gemeinsamen Ablage für nichtzugeordnete Nachrichten keine Separierung nach externen Sendern erfolgt, das heißt, dass nicht je externem Sender eine Liste angelegt wird. Während vorstehend beschrieben ist, dass derartige Datenübertragungen in Computerclustern erfolgen, sei darauf hingewiesen, dass gegebenenfalls auch an anderen Stellen derartige Verbindungsschnittstellen sinnvoll sind.

Es wird so ein hochparalleles Suchen nach Alteinträgen möglich, was es erlaubt, ein Matching sehr schnell herbeizuführen. Durch die Verwendung paralleler Speicher wird dabei auch eine wünschenswert sehr große Speicherbandbreite erreicht.

Es ist möglich, dass die Verbindungsschnittstelle dazu ausgebildet ist, als eingehende Datennachrichten Header oder dergleichen von unerwarteten Vorgängen, die an die Verbindungsschnittstelle von außen unerwartet übertragen werden, oder von ausgehenden Anfragen (Empfangsoperationen) einer Recheneinheit, die mit der Verbindungsschnittstelle verbunden ist, zu verarbeiten. Es sind also keinesfalls die vollständigen Nachrichten zu speichern oder bereits bei Anfrage entgegenzunehmen. Dies hat gleich mehrere Vorteile. Zum einen wird der Datenverkehr auf dem Netzwerk reduziert, was die verfügbare Übertragungsbandbreite besser nutzen hilft und Energie spart. Zum anderen wird auch rechnerintern weniger Energie und Übertragungsbandbreite benötigt, wenn nicht vollständige, große Datenpakete, sondern zunächst nur kleine darauf bezogene Kennungen, Informationen, Header oder dergleichen abgespeichert und gehandhabt werden müssen, bis die Zuweisung erfolgt ist und erst dann die Übertragung an einen damit klar definierten (rechnerinternen) Zielort erfolgt.

Bevorzugt wird der Speicher ein Dual-Port-Memory und/oder ein selbstkompaktierender Speicher sein und/oder es wird ihm eine Schaltung zugeordnet sein, die dazu ausgebildet ist, das Alter eines in ihm abgelegten Eintrags mitabzuspeichern und auf Zugriff auf den Speicher hin das Alter zu verändern. Die Verwendung eines Dual-Port-Memories erlaubt es, gleichzeitig Daten für den Vergleich aus dem Speicher auszulesen und Daten verändert wieder in den Speicher einzuschreiben, wenn etwa das Alter eines Eintrags erhöht wird oder eine Übereinstimmung gefunden wurde und an die Speicherstelle der Übereinstimmung zwecks Kompaktifizierung andere Daten geschrieben werden sollen. Die Verwendung eines selbstkompaktierenden Speichers ist vorteilhaft, weil Einträge zwar typisch in der Reihenfolge ihres Eingangs im Speicher abgelegt werden, aber von beliebigen Stellen entnommen werden; um "Lücken" im Speicher zu vermeiden, ist daher eine Kompaktierung sinnvoll; die Verwendung eines Speichers, der durch geeignete, ihm direkt zugeordnete Schaltkreise diese nach und nach entstehenden Lücken durch "Zusammenschieben" des verbleibenden Speicherinhalts füllt, also selbstkompaktierend ist, ist insoweit vorteilhaft, als zur Verhinderung der Datensegmentierung des Speichers keine Rechenzeit des Host-Rechners oder dergleichen aufgewendet werden muss. Bei Dual-Port-Speichern ist es möglich, Daten über einen der beiden Ports aus dem Speicher auszulesen, um den Vergleich durchzuführen, und gleichzeitig ausgelesene Daten über den zweiten Port, wie zur Kompaktierung eines eventuell segmentierten Inhalts erforderlich, zurückzuschreiben. Damit verursacht die Kompaktierung des selbstkompaktierenden Speichers bei Ausbildung als Dual-Port-Speicher keinen erhöhten Zeitbedarf; die Verwendung von Dual-Port-Speichern für selbstkompaktierende Speicher ist daher besonders bevorzugt.

Es ist bevorzugt, wenn die Ablage beziehungsweise, was insoweit als gleich angesehen wird, die Daten in den Speichern ablegenden Schaltkreise oder anderen Mittel dazu ausgebildet sind, als auf nichtzugeordnete Nachrichten bezogene Informationen Datenheader, Kennungen, Teile davon oder dergleichen und bevorzugt eine insbesondere fortlaufend vergebene Sequenznummer mitabzulegen. Dies erleichtert bei mehreren gefundenen Übereinstimmungen die Auswahl der für die weitere Verwendung heranzuziehende Information.

Es ist bevorzugt, wenn ein Verteilungsmittel vorgesehen ist, um auf eingegangene, nichtzuzuordnende Datennachrichten bezogene. Informationen auf einen der jeweiligen Speicher der Vielzahl von Vergleichselementen zu verteilen, insbesondere unter Berücksichtigung einer Round-Robin-Strategie und/oder eines aktuellen Füllstandes von jeweiligen Speichern. Damit wird verhindert, dass in einem Vergleichselement sehr viele Einträge in einem fast vollen Speicher durchlaufen werden müssen, während bei anderen der Vergleichselemente der Vergleichsdurchlauf aufgrund nur weniger Einträge sehr schnell beendet ist. Es ist dabei schon deshalb bevorzugt, von einer reinen Round-Robin-Strategie abzuweichen, das heißt von einer Strategie, bei der Einträge "reih um" gleichmäßig an die Speicherelemente verteilt werden, weil mit der Zeit eine Situation eintreten kann, bei der aus der Liste eines Speichers gefundene Übereinstimmungen immer wieder entfernt wurden, so dass diese Speicher entleert werden, während dies bei anderen Speichern nicht der Fall ist.

Besonders vorteilhaft ist eine solche Ablagestrategie insbesondere im Vergleich zu Verfahren, bei denen alle Nachrichten aus derselben Quelle in derselben Liste, das heißt dem gleichen Speicherbereich abgelegt werden. Erfahrungsgemäß tritt auch bei Sendern, die eine besonders große Menge von Datenpaketen senden, keine dadurch erhöhte Latenz auf; dies ist vorteilhaft, weil sonst gerade bei den besonders aktiven Sendern die Datenverarbeitung beeinträchtigt wird.

Es ist möglich und bevorzugt, dass eine erste Vielzahl von Vergleichselementen vorgesehen ist, um von außerhalb, also zum Beispiel außerhalb des Computers, in welchem die Schnittstelle vorgesehen ist, eingegangene Datennachrichten mit internen Datenanfragen (Empfangsoperationen), zu denen zuvor keine übereinstimmende eingehende Nachricht gefunden wurde, zu vergleichen und eine zweite Vielzahl von Vergleichselementen vorgesehen ist, um nach außen, das heißt zum Beispiel vom Computer, in welchem die Verbindungsschnittstelle vorgesehen ist, auszusendende Anfragen (das heißt Empfangsoperationen) mit zuvor von außen erhaltenen, unerwarteten Vorgängen zu vergleichen und weiter ein Mittel vorgesehen ist, um eingehende Datennachrichten der entsprechenden ersten oder zweiten Vielzahl von Vergleichselementen für Ablage beziehungsweise Vergleich zuzuordnen, um einen Vergleich nur auf dieser Vielzahl zu veranlassen. Mit anderen Worten kann die Vergleichsschnittstelle hardwareseitig so aufgebaut und so betrieben werden, dass über die Schnittstelle abzusendende Anfragen immer nur mit dort bereits eingegangenen Nachrichten, nicht aber mit früheren abzusendenden Anfragen verglichen werden müssen bzw. eingehende Nachrichten nur mit früheren Anfragen verglichen werden. Dies reduziert den Vergleichsaufwand weiter erheblich und verringert die Zeiten bis zum Auffinden einer Übereinstimmung und den Energieaufwand dafür.

Bevorzugt ist eine Verteileinheit vorgesehen, um eine eingehende Datennachricht simultan an eine Mehrzahl von Vergleichselementen für den Parallelvergleich mit den in der jeweiligen Speichereinheit abgelegten Informationen zu speisen, zum Beispiel im Wege eines Broadcast, wobei diese Verteileinheit insbesondere bevorzugt dazu ausgebildet ist, neu eingehende Datennachrichten erst dann an die Mehrzahl von Vergleichselementen zu speisen, wenn alle abzulegenden Informationen abgelegt und über zuvor durchgeführte Vergleiche entschieden ist. Auf diese Weise wird verhindert, dass Fehler bei der Ausgabe auftreten, weil zu einer aktuell bearbeiteten Datennachricht, zu der kein passender vorhandener Eintrag vorliegt und damit auch nicht gefunden werden kann, für nachfolgende Suchen nach genau dieser aktuell bearbeiteten Information noch kein entsprechender Eintrag im Speicher vorhanden ist. Das Zurückhalten einer weiteren Anfrage ist die einfachste Methode, daraus resultierende Schwierigkeiten, die als "Wettlaufsituation" bezeichnet werden, zu vermeiden.

Bevorzugt ist auch, wenn eine Einheit vorgesehen ist, um bei in mehreren der Mehrzahl von Vergleichselementen vorhandenen, eingehenden Datennachrichten zuzuordnenden Informationen die älteste Information als auszugebende Information auszuwählen, damit ein Transfer der entsprechenden Datenpakete veranlasst werden kann. Dies stellt sicher, dass nicht spätere, vergleichbare Einträge zuerst herangezogen werden und so Fehler durch falsche Datenreihenfolgen auftreten.

Es wird weiter als bevorzugt eine Verbindungsschnittstelle für einen Daten innerhalb eines Clusters austauschenden Computer vorgeschlagen, bei welcher vorgesehen ist, dass die Schnittstelle eine Mehrzahl von Anschlüssen aufweist und zum Datenaustausch über jeden dieser Mehrzahl mit jeweils einem anderen Computer ausgebildet ist.

Es wurde somit erkannt, dass vorteilhaft unmittelbar in der Recheneinheit eine Schnittstelle vorgesehen sein kann, über welche die Recheneinheit mit mehreren anderen Einheiten kommunizieren kann. Dies macht zunächst Hubs, Switches, Router und dergleichen überflüssig und spart somit sowohl Energie als auch (Latenz-)Zeit bei der Datenübertragung. Dies ist für sich oder in Kombination mit anderen vorteilhaften Merkmalen und Ausführungsformen als patentwürdig anzusehen.

Es sind dazu bevorzugt so viele Anschlüsse an einer Recheneinheit vorgesehen, dass besonders günstige Verbindungstopologien wie eine 3D-Torus- oder 6D-Hypercubus-Topologie realisiert werden kann. Andere als vorteilhaft bekannte Topologien für Cluster seien als unterstützbar ebenfalls offenbart.

Besonders bevorzugt ist es auch, wenn der Anordnung eine Fehlerdetektionsstufe zur Detektion von Datenübertragungsfehlern zugeordnet ist, die vor der internen Datenpaketweiterleitung Fehler im Datenpaket detektiert, um bei Detektion von Fehlern die Neuübermittlung zuvor fehlerhaft übertragener Datenpakete zu veranlassen. Als interne Weiterleitung ist dabei zunächst die Weiterleitung an jene Einheiten zu verstehen, auf welche die zentrale(n) Prozessoreinheit(en) der Zielrechnereinheit direkten Zugriff für die Datenverarbeitung hat/haben; es wird aber besonders bevorzugt, wenn die Neuübermittlung bereits veranlasst wird, bevor sich - insbesondere verbindungsschnittstellenintern - Stufen mit der Zuordnung eingehender Daten zu auf der Zielrechnereinheit laufenden Prozessen befassen. Dies hat den Vorteil, dass die nachfolgenden Verarbeitungsstufen in der Recheneinheit nicht mit der Bearbeitung fehlerhafter Datenpakete belastet werden. Die Datenpakete können Anfragen zu Datentransfers sein oder selbst vollständige Datentransfers bilden.

Es ist besonders bevorzugt, wenn nicht eine Datenübertragungsfehlerdetektionsstufe für mehrere Verbindungsschnittstellenanschlüsse vorgesehen ist, sondern, was möglich ist, an jedem Eingang unmittelbar eine Fehlerdetektion durchgeführt wird, wozu eine entsprechende Vielzahl an unabhängigen Fehlerdetektionsstufen vorgesehen sein kann; diese können auch fest in Hardware implementierte Fehlerdetektionsalgorithmen ausführen.

Weiter ist es bevorzugt, wenn kurze und lange Datenpakete auf unterschiedliche Weise ausgetauscht werden können, insbesondere unter Heranziehung unterschiedlicher Hardwareeinheiten, wozu die Schnittstelle entsprechend baulich mit unterschiedlichen Hardwareeinheiten für kurze und lange Datenpakete vorgesehen sein kann. Diesen Hardwareeinheiten ist ein eingehendes Datenpaket beziehungsweise eine eingehende Nachricht bevorzugt wahlweise selektiv zuführbar; dazu kann in einer bevorzugten Variante die Art der Nachricht unmittelbar am Eingangsport identifiziert werden. Es sind dementsprechende Nachrichtenart-Identifikationsmittel, insbesondere Nachrichtenlängen-Identifikationsmittel vorgesehen. Dies hat den Vorteil, dass kurze Datenpakete sofort übertragen werden können, gegebenenfalls unter Zwischenspeicherung in Pufferspeichern und dergleichen, was bei kurzen Datenpaketen nur einen geringen Speicherbedarf erfordert, während längere Datenpakete so ausgetauscht werden können, dass zunächst ein Header oder dergleichen übertragen wird und erst dann, wenn das damit angekündigte Datenpaket zugeordnet ist und im Zielrechner beziehungsweise der Zielrecheneinheit ein entsprechender Zielort oder Zielprozess dazu bestimmt ist, die eigentliche Datenübertragung erfolgt.

Es ist möglich und bevorzugt, im Speicher der Recheneinheit, insbesondere im Hauptspeicher (RAM) der Recheneinheit beziehungsweise des Computers für die Speicherung von Kurznachrichten Speicherplatz zu reservieren, und zwar ist es besonders bevorzugt, für jeden laufenden Thread einen separaten Speicherbereich vorzusehen.

Es ist möglich und bevorzugt, dass zur Übermittlung längerer Datenpakete eine Einheit vorgesehen ist, mit welcher festgelegt wird, auf welchen entfernt liegenden Speicherbereich zugegriffen werden soll, insbesondere lesend und/oder schreibend, und wobei bevorzugt auch die Einheit dazu ausgebildet ist, erfolgreiche beziehungsweise erfolglose Schreib- und/ oder Leseoperationen erkennen und/oder signalisieren zu können. Dies ist vorteilhaft, weil damit längere Datenpakete, das heißt Datenpakete, die eine große Menge an Information neben dem Header umfassen, unmittelbar dorthin geschrieben werden können, wo sie von der Software auf der Zielrechnereinheit gefunden und benötigt werden beziehungsweise abgerufen werden können von einem Speicherplatz, an dem sie sich gerade befinden, so dass besonders problemfrei eine Übertragung mit nur wenig Zwischenspeicherung möglich ist. Indem erfolgreiche Schreib- und/oder Leseoperationen erzielt werden, ist auch die Notwendigkeit des Eingreifens einer zentralen Prozessoreinheit weitgehend reduziert, was wiederum die Rechnerlast verringert und es können entsprechende Speicherbereiche gegebenenfalls auch, etwa nach einer erfolgreichen Leseoperation, freigegeben werden.

Es ist demnach insbesondere bevorzugt und möglich, die Schnittstelle auch hardwareseitig so auszugestalten, dass kürzere und längere Datenpakete an jeweils unterschiedliche Stellen gesandt werden und eine programmierbare Hardwarestelle vorgesehen wird, um die Platzierung beziehungsweise das Ziel des kurzen Datenpaketes nach Art eines programmierbaren I/O zu bestimmen; für längere Datenpakete findet dagegen bevorzugt praktisch ein (Remote) Direct Memory Access-artiger Zugriff statt.

Es ist möglich und vorteilhaft, dass eine Adressübersetzungseinheit zur Übersetzung von globalen beziehungsweise virtuellen Adressen auf lokale beziehungsweise physikalische Adressen vorgesehen ist, um den Zugriff auf entfernt liegende Speicherbereiche bei der Datenpaketübertragung zu erleichtern, insbesondere durch Ermöglichung des softwareeingriffsfreien Zugriffs. Durch eine Adressübersetzungseinheit wird es möglich, einen erleichterten Zugriff auf entfernt liegende Speicherbereiche vorzusehen, ohne dass eine übermäßige Belastung der zentralen Prozessoreinheit einer Rechnereinheit auftritt.

In der Verbindungsschnittstelle der vorliegenden Erfindung wird, wie auch aus dem Vorhergehenden ersichtlich ist, typisch eine Vielzahl separater, unterschiedlicher Hardwareeinheiten vorgesehen sein, die zum Teil unterschiedliche Funktionalitäten implementieren. Es ist bevorzugt, wenn zur Untereinander-Verbindung verschiedener Einheiten in der Verbindungsschnittstelle eine Route-Möglichkeit, insbesondere ein Crossbar-Schalter vorgesehen ist.

Es ist weiter bevorzugt, wenn Status- beziehungsweise Register-File-Mittel in der Verbindungsschnittstelle vorgesehen sind, um Einstellungen und/oder Zustände der Verbindungsschnittstelle beziehungsweise von Komponenten auszulesen und/oder verändern zu können. Typisch kann dies durch die Rechnereinheit erfolgen, welcher die Verbindungsschnittstelle zugeordnet ist. Auf die Möglichkeit eines Fernzugriffs in lesender oder schreibender Weise auf Status- und/oder Registerfiles sei jedoch hingewiesen.

Es ist bevorzugt, wenn in der Verbindungsschnittstelle selbst ein Vergleich zwischen anstehenden Transaktionen, das heißt insbesondere angefragten Datentransfers einerseits und eingehenden Datenpaketen andererseits vorgenommen werden kann. Die angefragte Transferanfrage kann dabei entweder durch eine fremde, sendende Einheit geschehen, welche anfragt, ob, wann und/oder wohin ein insbesondere längeres Datenpaket gesendet werden kann oder von wo es abgerufen werden kann; eine Datentransferanfrage ist aber auch dergestalt möglich, dass die Rechnereinheit selbst bei einer oder mehreren angeschlossenen anderen Rechnereinheiten und dergleichen nach benötigten Daten fragt. Es sei darauf hingewiesen, dass gegebenenfalls auch Daten für die Übertragung an dritte Einheiten in dem Speichermittel bereitgestellt werden können.

Durch diese Mechanismen wird eine weitgehende Autonomie der Verbindungsschnittstelle erreicht, so dass die zentrale Prozessoreinheit der Recheneinheit entlastet werden kann; es versteht sich, dass schon einzelne der vorstehend beschriebenen Mechanismen für sich allein als vorteilhaft angesehen und damit als separat schutzwürdig betrachtet werden.

Es ist vorteilhaft, wenn in der Verbindungsschnittstelle zumindest vorgesehen ist eine Protokoll-Kontroll- beziehungsweise -Übersetzungseinheit, die insbesondere mehrere Datenpakete so zusammenführen kann, dass bei begrenzten Datenpaketgrößen ein gemeinsamer größerer Datenbereich gebildet werden kann, und/oder die den Datenfluss beziehungsweise -strom so kontrolliert, insbesondere zwischen dem Crossbar und zumindest einer der (typisch an den Crossbar angeschlossenen) Einheiten wie der Adressübersetzungseinheit, dem Status- und/ oder Registerfilemittel, der Kurzdatenübermittlungseinheit und der Datenpaketmarkenvergleichseinheit. Dies verbessert die Leistung der erfindungsgemäßen Schnittstelle weiter.

Die Erfindung wird im Folgenden nur beispielsweise anhand der Zeichnung beschrieben. In dieser ist dargestellt durch
- Fig. 1: eine Verbindungsschnittstelle der vorliegenden Erfindung,

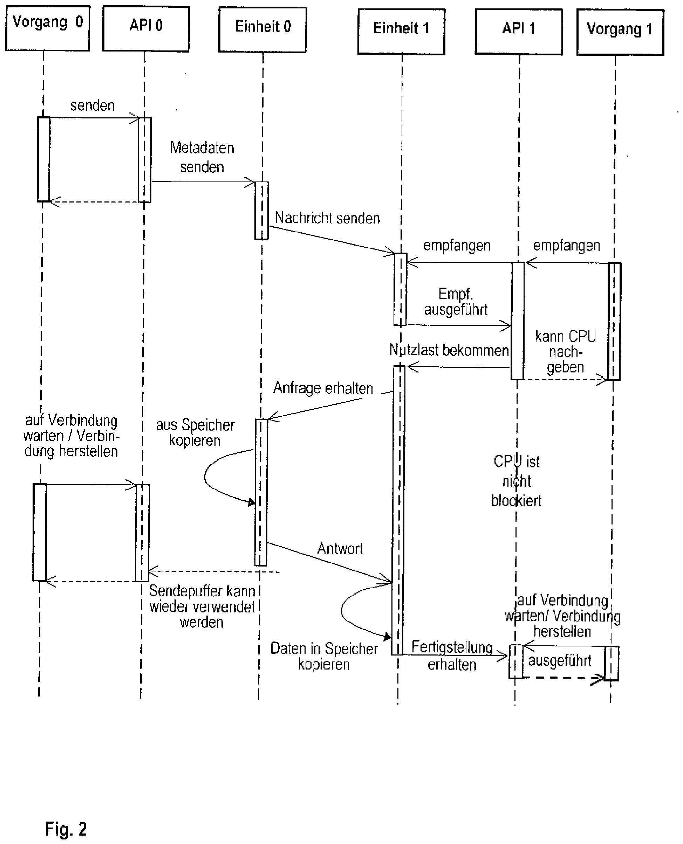

- Fig. 2: die Kommunikationssequenz auf der Verbindungsschnittstelle,

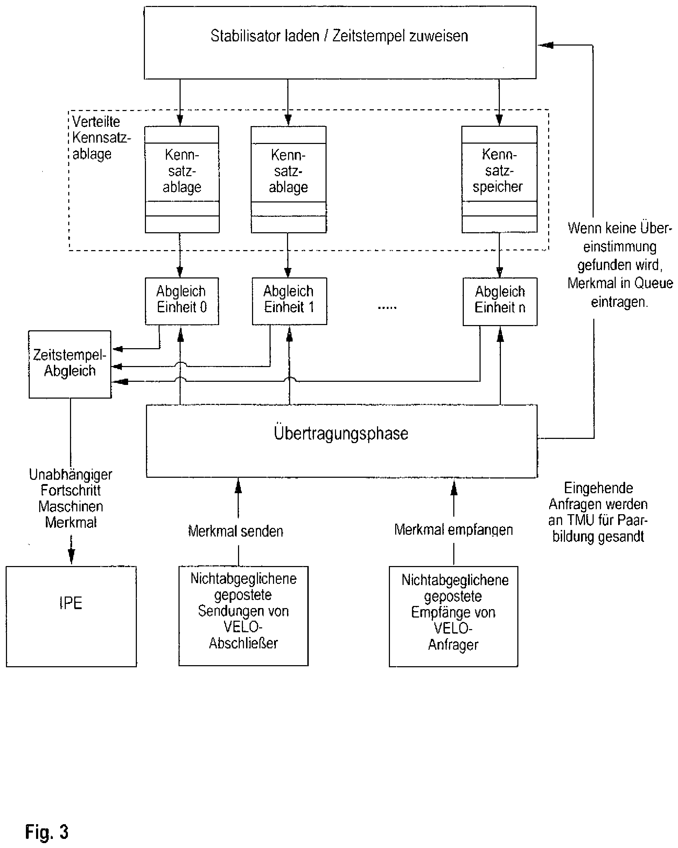

- Fig. 3: ein Detail von Fig. 1.

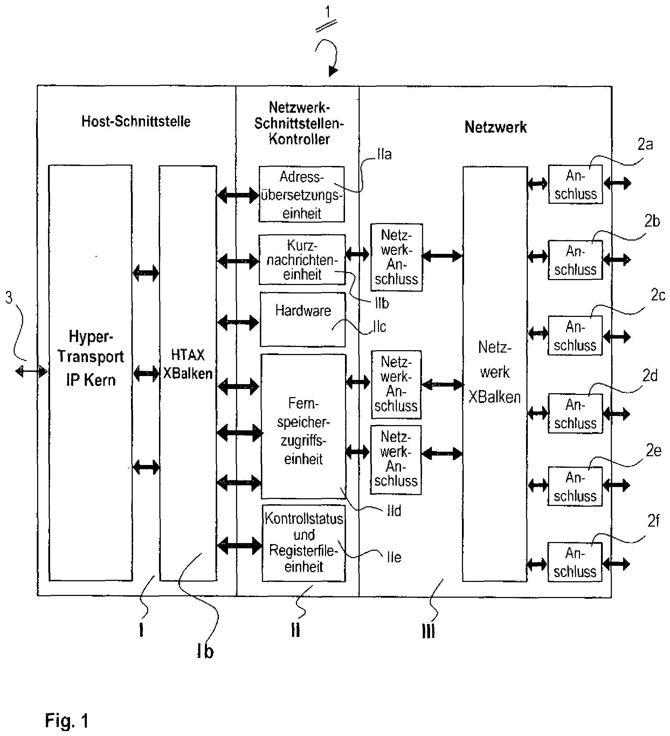

Nach Fig. 1 umfasst eine allgemein mit 1 bezeichnete Verbindungsschnittstelle 1 für über als Linkports bezeichnete Anschlüsse 2a, 2b, 2c, 2d, 2e, 2f mit Einheiten eines Clusters von Recheneinheiten (nicht gezeigt) Information austauschenden Computer, der vorliegend über eine Schnittstelle 3 mit der Verbindungsschnittstelle 1 kommuniziert, eine Mehrzahl von Anschlüssen 2a-2f, die jeweils für den Austausch von Daten mit einer Mehrzahl anderer Recheneinheiten ausgebildet ist.

Fig. 1 zeigt dabei, dass die Verbindungsschnittstelle im wesentlichen in drei funktionale Blöcke I, II und III unterteilt ist, zwischen denen jeweils Information ausgetauscht wird, wie durch die Pfeile angedeutet ist, die zwischen den Blöcken hinüber verlaufen.

Der erste Block I betrifft das Host-Interface, welches dazu dient, die Verbindungsschnittstelle an den Prozessor der Rechnereinheit anzubinden. In einer praktischen Implementierung kann es sich um einen Bus handeln, der besonders eng an eine CPU gekoppelt ist, wie beispielsweise gemäß dem Hypertransport-Protokoll zur direkten Anbindung an OPTERON-Prozessoren der Firma AMD. Während eine solche direkte Anbindung zwar nicht zwingend erforderlich ist, hat sie doch den Vorteil einer signifikant verringerten Latenz. Die Schnittstelle zu dem - wie angegeben bevorzugt - prozessornahen Bus Ia wird im vorliegenden Fall über einen Crossbar Ib mit verschiedenen Einheiten des zweiten Funktionsblocks verbunden, bei dem es sich um einen Netzwerk-Interface-Controller handelt.

Der zweite Block II ist der Netzwerk-Interface-Controller. Der Netzwerk-Interface-Controller II besteht aus mehreren Modulen, die hier, wie möglich und bevorzugt, durch separate Hardwareeinheiten beziehungsweise -stufen realisiert sind. Es handelt sich dabei um eine Adressübersetzungseinheit IIa, eine Kurznachrichteneinheit IIb, eine protokollbeschleunigerimplementierende Hardware IIc, eine Remote-Memory-Access-Einheit IId und eine Status- und Registerfile-Einheit IIe.

Die Adressübersetzungseinheit (Address Translation Unit, ATU) IIa ist so aufgebaut, dass mit ihr eine globale virtuelle Adresse einer lokalen physikalischen Adresse zugeordnet werden kann, um vom Hauptspeicher der lokalen Rechnereinheit, das heißt des lokalen Knotens, lesen zu können oder dorthin schreiben zu können. Die Adressübersetzungseinheit ist dabei bevorzugt so aufgebaut, dass eine Adressumsetzung ohne Betriebssystemaufruf erfolgen kann; die dafür erforderlichen Maßnahmen sind dem Durchschnittsfachmann bekannt.

Die Kurznachrichteneinheit IIb ist dazu ausgebildet, kurze Nachrichten schnell versenden beziehungsweise empfangen zu können. Die Nachrichten sollen dabei nur eine geringe Länge, bezogen auf die "Nutzlast" besitzen, also bezogen auf jene Daten, die neben den zusätzlichen Informationen des Datenheaders übertragen werden können. Die Kurznachrichteneinheit IIb ist daher vorliegend dazu ausgebildet, lediglich Nachrichten einer Größe von 8 bis zum Beispiel 256 Byte zu übertragen; auf die Möglichkeit, eine Aufteilung beziehungsweise Aufspaltung längerer Nachrichten in mehrere kleine Nachrichten vorzunehmen, sei prinzipiell hingewiesen. Die Kurznachrichteneinheit IIb arbeitet typisch durch die Verwendung sowohl von Programmed I/O als auch unter Verwendung der DMA-Technik. Dabei ist die Kurznachrichteneinheit IIb so ausgebildet, dass Nachrichten per PIO versendet und per DMA empfangen werden können. Damit kann die Software die Daten direkt an Hardware senden, ohne diese zunächst im Hauptspeicher abzulegen und die Hardware über die Platzierung im Speicher zu informieren, wie dies bei der DMA-Technik der Fall ist.

Die Kurznachrichteneinheit wird also dazu verwendet, um Anfragen zu erzeugen, die zu Protokolleinheiten lokal oder entfernt weitergeleitet werden. Die RMA-Einheit verwendet RDMA-GET-Requests und erzeugt Abschlussmeldungen entsprechend dem Modifikationsschema des RMA.

Die Kurznachrichteneinheit IIb hat weiter für jeden laufenden Software-Thread Zugriff auf einen reservierten Bereich im Hauptspeicher, um eingehende Nachrichten dort abzulegen. Dass dazu entsprechende Zugriffsverwaltungsmittel wie Pointer usw. vorzusehen sind, wird als einleuchtend betrachtet und daher nicht näher diskutiert. Die Software, die auf der zentralen Prozessoreinheit abgearbeitet wird, kann dann, etwa durch Polling, die Bereiche darauf kontrollieren, ob neue Nachrichten eingegangen sind.

Die Einheit IId für den Fernspeicherzugriff (Remote Memory Access, RMA) ist dazu ausgebildet, größere Datenmengen zu übertragen. Dazu sind Mittel vorgesehen, um per DMA-Zugriff unmittelbar auf einen entfernt liegenden Speicher, das heißt einen Speicher in der Zielrecheneinheit des Clusters, zuzugreifen, was die lokale Recheneinheit weitgehend zu entlasten vermag, da die RMA-Einheit lediglich Informationen darüber empfangen muss, auf welchen entfernt liegenden Bereich lesend beziehungsweise schreibend zugegriffen werden soll und wo die Daten korrespondierend lokal geschrieben beziehungsweise gelesen werden sollen. Die Fernspeicherzugriffseinheit IId ist dazu ausgebildet, auf das Ende einer Operation hin eine Mitteilung abzusetzen, mit welcher einem Programm signalisiert werden kann, ob eine Fernzugriffsoperation erfolgreich war oder nicht. Dies kann durch Setzen abfragbarer Flags für Polling, durch Interruptgenerierung usw. geschehen.

Die Adressumsetzungen zum Lesen und/oder Schreiben werden von der Adressübersetzungseinheit IIa bevorzugt direkt auf dem entfernten Knoten durchgeführt, was eine softwareunterstützungsfreie Operation ermöglicht.

Die Kontrollstatus- und Registerfileeinheit IIe ist dazu ausgebildet, Statusinformation der Verbindungsschnittstelle beziehungsweise deren Stufen, Blöcke und Einheiten auslesbar und einstellbar zu machen.

Die Protokollbeschleuniger implementierende Hardware IIc dient dazu, die hereinkommenden Nachrichten den angefragten Daten beziehungsweise laufenden Threads zuzuordnen, wie noch detaillierter beschrieben werden wird.

Block III stellt den eigentlichen Netzwerkteil dar.
Die Einheiten des Blocks II, das heißt der Netzwerkschnittstelle, kommunizieren mit diesem Netzwerkteil III, und zwar vorliegend über mehrere Netzwerkports IIIa, IIIb, IIIc, wobei im vorliegenden Ausführungsbeispiel lediglich ein Netzwerkport IIIa für den Anschluss der Kurznachrichteneinheit IIb an den Netzwerkteil III vorgesehen ist, während zwei Netzwerkports IIIb, IIIc für die Kommunikation der Speicherzugriffseinheit IId vorgesehen sind. Dies ist insoweit sinnvoll, als durch Übermittlung längerer Nachrichten der Port länger blockiert sein kann und daher für andere Aufgaben nicht zur Verfügung steht. Einsichtigerweise sollte jedoch - was vorliegend der Fall ist, die RMA-Einheit IId dazu ausgebildet sein, mehr als eine Anfrage zu einer gegebenen Zeit bearbeiten zu können. Die Netzwerkports IIIa, IIIb, IIIc dienen der Konvertierung der Pakete aus der Netzwerkschnittstelle zu jener Datenstruktur, wie sie im (Cluster-)Netzwerk verwendet wird. Mit anderen Worten wird eine Protokollkonverterfunktionalität durch ein Protokollkonvertermittel realisiert.

In einer bevorzugten Ausführungsform erfolgt die Datenübertragung zwischen Rechnereinheiten des Clusters kreditbasiert, das heißt flusskontrollartig. Es sei darauf hingewiesen, dass die Netzwerkports dazu ausgebildet sind, vom Netzwerk empfangene Datenpakete zusammenzuführen und zwischenzuspeichern, bis die Pakete durch eine funktionale Einheit aus dem Netzwerkport abgerufen werden. Die Netzwerkports weisen damit ein internes Speichermittel auf. Dieses ist insbesondere ein Speichermittel zur Datenpaketvereinigung.

Die Netzwerkports IIIa bis IIIc können jeweils wahlweise auf einen der Linkports III2a, III2b usw. aufgeschaltet werden. Die Aufschaltung der Netzwerkports IIIa bis IIIc auf die Linkports erfolgt unter Verwendung eines weiteren Crossbars IIId. Dieser ist hier wie möglich und bevorzugt so ausgebildet, dass jede Eingangs-Ausgangsport-Kombination zeitgleich kommunizieren kann. Zudem ist er dazu ausgebildet, eine kreditbasierte Flusskontrolle zu verwenden, was ein Überlaufen von Pufferspeichern vermeidet. Der Crossbar ist hier mit mehreren virtuellen Kanälen ausgestattet, die sich ein und dasselbe physikalische Medium teilen. Dies ermöglicht es, Datenströme verschiedener funktionaler Einheiten logisch zu trennen und vermeidet Deadlocks.

In der dargestellten, bevorzugten Ausführungsform sind im Crossbar logische Queues für jede Kombination aus virtuellem Kanal und Ausgangsport vorgesehen, die dazu dienen, die unabhängigen Datenströme voneinander zu trennen. Es kann dabei jedes eingehende Datenpaket im Eingangsport in eine entsprechende Queue einsortiert werden und es müssen in diesen Queues lediglich auf die Daten weisende Pointer gespeichert werden, wozu die Queues vergleichsweise wenig Speicher benötigen, während die Daten selbst in einem allen Queues gemeinsamen Datenpuffer liegen.

Die Linkports III2a bis III2f sind dazu ausgebildet, eine fehlerfreie Übertragung der Pakete zu den entfernten Recheneinheiten oder Knoten des Clusters zu bewirken, wozu im beschriebenen Ausführungsbeispiel ein entsprechender Fehlerkontrollmechanismus implementiert ist, um bei Detektion eines fehlerhaften Empfangs eine neuerliche Übertragung zu bewirken. Damit wird eine fehlerfreie Paketübertragung bei den funktionalen Einheiten, mit denen die lokale Recheneinheit beziehungsweise der lokale Knoten kommuniziert, bewirkt, ohne dass das Gesamtsystem durch die Fehlerkorrektur massiv belastet wird.

Bei der Verwendung der erfindungsgemäßen Einheit kommt es nun darauf an, die für eine Vielzahl von Threads einlaufenden Daten korrekt und schnell zuzuordnen, und zwar unabhängig davon, ob diese Daten von einem Thread angefragt wurden, also eine entsprechende Empfangsoperation existiert, oder ob sie unerwartet ankommen.

Wichtig ist, dass die Zuordnung schnell geschehen muss, ohne dass durch zwischenzeitlich oder versetzt einlaufende Nachrichten Probleme entstehen. Dazu sind nun in einer Abgleich- oder Matchingeinheit mehrere parallele Einheiten vorgesehen, mit denen eingehende Nachrichten bzw. Anfragen mit Informationen zu bereits eingegangenen Daten simultan verglichen werden. Bei erfolgloser Suche über diese Einheiten werden die eingehenden Nachrichten so abgelegt, dass eine spätere Suche danach möglich ist; bei erfolgreicher Suche wird aufgrund der Parallelität zunächst sichergestellt, dass auf die älteste der vorhandenen abgelegten Nachrichten Bezug genommen wird. Zudem ist sicherzustellen, dass nicht durch zu viele oder zu alte vorhandene Nachrichten Probleme auftreten. Dies geschieht im Einzelnen über Hardware und diese verwendende Prozesse wie folgt:
Die Matchingeinheit ist mit einer Anzahl parallel arbeitender Elemente versehen, die die jeweils ebenfalls parallel vorgesehenen Ablagen älterer Informationen, zu denen zuvor keine Übereinstimmung gefunden wurde, durchsuchen. Für den Fall, dass mehrere der parallel arbeitenden Elemente eine Übereinstimmung finden, ist ein Auswahlmittel zur Auswahl der korrekten Übereinstimmung vorgesehen, an das die parallel arbeitenden Elemente die von ihnen gefundenen Übereinstimmungen melden, wobei dieses Auswahlmittel dann zur Bestimmung des Alters der in den verschiedenen Elementen und deren Ablagen gefundenen, übereinstimmenden Einträge und zur Auswahl des ältesten dieser Einträge angeordnet ist. Weiter ist die Matchingeinheit mit Logik zur Übertragung eingehender Nachrichten an die parallel arbeitenden Elemente, mit Logik zur Ablage von einlaufenden Informationen, zu denen keine Übereinstimmung gefunden wurde, und mit Logik zur Behandlung von Überläufen etc. versehen.

Dies vorausgeschickt, setzt eine Einheit einen Senderequest auf, in welchem angegeben ist, wer an wen wie viele Daten von welcher Adresse aus sendet, sowie einen Tag, der softwareseitig zur Nachrichtenidentifizierung verwendet werden kann.

Diese Sendeanforderung beziehungsweise dieser Senderequest wird über das Netzwerk an den Empfänger versandt, dort auf Fehlerfreiheit überprüft und, fehlerfreie Übertragung vorausgesetzt, die keine Neuübertragung erforderlich macht, dann in der Matchingeinheit überprüft.

Sofern die Matchingeinheit entsprechende Daten findet, also ein erfolgreiches Match gegeben ist, werden die gefundenen Informationen zusammen mit dem Senderequest an den Protokollsequenzer weitergegeben, der eine oder mehrere RDMA-GET-Transaktionen aufsetzt, um die Daten vom Sender zum empfangenden Prozess zu übertragen. Diese Operation führt zu einer Benachrichtigung sowohl des Empfängers als auch des Senders, was den Sende-Empfangs-Prozess erfolgreich beendet. Wird hingegen beim Matchingvorgang kein passender Eintrag für den Senderequest gefunden, wird dieses in die internen Matchingstrukturen eingetragen, und zwar - hier - lediglich die Metadaten, das heißt die vorstehend angegebenen Informationen über Datenmenge, Zieladresse, Softwaretag usw.; dass aber per se eine Ablage von mehr Information als nur der Metadaten möglich wäre, sei erwähnt.

Empfangsseitig wird, wenn ein Softwareprozess Daten benötigt, ein RECEIVE-Request aufgesetzt, in welchem vermerkt ist, wie viele Daten benötigt werden, wo sie empfangen werden sollen, welcher Empfänger sie benötigt und welches Tag eine zugehörige Sendeanforderung aufweisen soll. Es sei darauf hingewiesen, dass es erfindungsgemäß auch möglich ist, bestimmte Angaben nicht vollständig zu determinieren, sondern "wild cards" vorzusehen, die ein Zusammenpassen auf verschiedene und beliebige Empfänger und/oder Tags ermöglichen.

Wie erwähnt, sind eine Anzahl parallel arbeitender Elemente vorgesehen, die jeweils ebenfalls parallel vorgesehene Ablagen älterer Informationen aufweisen, genauer einen Headerstore implementieren, das heißt eine Queue, in der sowohl unerwartete Sendeanforderungen als auch abgesandte Empfangsanforderungen gespeichert werden können; dieser Header-Store bzw. diese Header-Ablage ist logisch in zwei Queues unterteilt, nämlich einen Teil für die unerwarteten Vorgänge und einen Teil für die abgesetzten Empfangsanforderungen.

Es sind also erfindungsgemäß eine Reihe Headerstores und Matchingelemente parallel implementiert, was die lineare Suche durch die Headerablage eindeutig zu beschleunigen vermag. Indem eine Ablage pro Matchingeinheit verwendet wird, ist zugleich eine ausreichende Speicherbandbreite für eine schnelle und effiziente Suche realisiert. Der Headerablage zugeordnet ist das eigentliche Vergleichselement, das binnen eines Taktes den nächsten Header aus dem Store zu einem gegebenen Zeitpunkt mit einem eintreffenden Request vergleichen kann. Dass der Headerstore für verschiedene Empfängerprozesse simultan arbeiten kann, indem er partitioniert wird, sei als Möglichkeit offenbart.

Für die Parallelsuche wird durch eine von zur Matchingeinheit zugehörige Logik vergebene, eindeutige Sequenznummer jedes Eintrags eine exakte zeitliche Ordnung garantiert, damit dann, wenn mehrere Matches verschiedener Einheiten positiv sind, die älteste Anforderung selektiert werden kann.

Innerhalb der jeweiligen Elemente selbst, von denen mehrere parallel vorhanden sind, wird die korrekte Reihenfolge der abgelegten Information zunächst durch eine FIFO-Datenstruktur gewährleistet. Das Alter eines Eintrags kann dabei bestimmt werden, indem einem Eintrag bei seiner Hinzufügung zur Liste das Alter "0" zugeordnet wird und dieses Alter bei jedem Durchsuchen der Queue inkrementiert wird. Dass während einer Suche alle Header-Ablagen gegen den Einschub neuer Header geblockt sind, sei hier erwähnt.

Die FIFO-Datenstrukturen sind hier wie möglich und bevorzugt selbstkompaktierend, was einen leicht zu pipelinenden, linearen Gang durch den Speicher mit geringerem Managementaufwand ermöglicht. Es ist vorteilhaft, wenn die Queues selbstkompaktierend organisiert sind, deren Werte werden zuvor in chronologischer Reihenfolge stets am Ende der Queue hinzugefügt, können aber von einer beliebiger Stelle innerhalb der Queue entfernt werden. Dies würde ohne Gegenmaßnahmen dazu führen, dass die Queue segmentiert, das heißt dass zwischen den eigentlichen Werten immer wieder an jenen Stellen Lücken auftreten, wo Werte entfernt wurden. Dies wird durch Kompaktierung verhindert; dabei werden die Lücken durch Verschieben der noch in der Queue verbleibenden Werte wieder aufgefüllt. Da dies selbsttätig, also ohne Eingriff des Host-Rechners geschehen kann, wird von einer Selbstkompaktierung gesprochen. Zur eigentlichen Selbstkompaktierung wird im Ausführungsbeispiel - wie bevorzugt - ein Dual-Port-Memory verwendet, wobei der Kompaktierungsprozess parallel zu einer eigentlichen Suche durchgeführt werden kann. Während des Kompaktierens kann zugleich auch das Alter jedes Eintrags inkrementiert werden. Es wird dabei über einen der Ports ein Wert ausgelesen und über den anderen Port ein Wert mit inkrementiertem Alter so zurückgeschrieben, dass erforderlichenfalls Lücken geschlossen werden.

Das Auswahlmittel, das unter den von allen Elementen zu einer eingegangenen Nachricht gefundenen Übereinstimmungen die korrekte auswählt, kann somit einfach als Zeitstempelvergleichseinheit gebildet sein, wobei es hier so gebildet ist, dass damit die Sequenznummern genauso wie das Alter bestimmt werden und bei mehreren positiven Einträgen aus parallelen Elementen der korrekte gewählt und weitergeleitet wird.

Auf diese Weise wird die Latenz signifikant verbessert. Zudem ist kein Crossbar erforderlich und die Anordnung lässt sich ohne weiteres skalieren.

Es ist nun weiter sinnvoll, die verschiedenen, parallel vorgesehenen Elemente gleichmäßig auszulasten. Es muss dazu vermieden werden, dass die FIFO-Ablage eines Elements nahezu voll ist, während die FIFO-Ablagen anderer Elemente nahezu leer sind. Dazu ist als weitere Logik in der Matchingeinheit eine Lastausgleichseinheit vorgesehen, die dazu ausgebildet ist, abgesandte Empfangs- und abgesandte Sendeeinheiten an die verschiedenen Matcheinheiten und ihre entsprechenden Header-Ablagen unter Berücksichtigung von deren Auslastung bzw. Füllstand zu verteilen. Diese Lastausgleichslogik ist hierbei - wie bevorzugt und möglich - mit einem Maskenregister implementiert, über welches jene Elemente, deren Ablagen die Empfangsheader, das heißt die auf vom Host-Rechner übermittelte Empfangsoperationen bezogene Information, halten, von jenen zu unterscheiden sind, welche die Header unerwarteter, das heißt unerwartet eintreffender Nachrichten speichern.

Die Header werden entsprechend zugeordnet. Um einen Header abzulegen, analysiert die Lastausgleichslogik den MPI-Bereich eines ankommenden Headers und überprüft die Füllsignale der verschiedenen Header-Ablagen. Wenn mehrere der Header-Ablagen noch nicht vollständig gefüllt sind, werden eingehende Header gemäß einer Round-Robin-Technik verteilt. Der Lastausgleicher führt zugleich den Sequenznummernzähler für jeden MPI-Bereich. Ein Header, der in eine Headerschlange abgelegt wird, erhält von diesem Sequenznummernzähler eine Sequenznummer und der Sequenzzähler wird danach erhöht. Der Sequenznummernzähler wird nach einer gefundenen Übereinstimmung zurückgesetzt.

Um Race-Bedingungen zu verhindern, ist die Lastausgleichseinheit so gebildet, dass sie abwartet, bis ein gegenwärtiger Matchprozess vollständig abgeschlossen ist, bevor einer Header-Ablage ein neuer Header angefügt wird, und umgekehrt wartet der nächste Matchprozess ab, bis alle verfügbaren Header vollständig angefügt worden sind.

Um einen Header in allen parallelen Elementen simultan abgleichen zu können, müssen diese abzugleichenden Header auch an die parallelen Elemente übertragen werden. Dazu ist ein Headerbroadcastmittel vorgesehen. Dieses ist dazu ausgebildet, zunächst abzuwarten, bis alle Elemente ihren augenblicklichen Abgleich beendet haben und bis dann der abgeglichene Header, falls noch nicht gematcht, in eine der Header-Ablagen eingesetzt ist beziehungsweise, falls ein Match gefunden wurde, bis der gematchte Header an den Sequenzer übertragen ist; erst dann wird der nächste Header per Headerbroadcast vom Headerbroadcastmittel übertragen; dass dazu entsprechende Steuerlogik vorgesehen ist, die zustandsabhängig arbeitet, sei als einleuchtend erwähnt. Es sei auch darauf hingewiesen, dass es sich bei dem Headerbroadcastmittel um ein Mehrstufenmodul handeln kann, sofern die Anzahl an parallel vorhandenen Elementen zu groß wird. Es ist auch möglich, gegebenenfalls immer simultan auf den Ablagen für gepostete Sende- und gepostete Empfangsdaten simultan zu suchen, sofern hierbei Racebedingungen vermieden werden, was durch Vorab-Überprüfung, ob diese beiden übereinstimmen würden, geschehen kann oder indem nur zugelassen wird, dass unterschiedliche Ränge simultan übereinstimmen.

Bei der bislang beschriebenen Anordnung könnten Probleme entstehen, wenn sehr lange keine Übereinstimmungen gefunden werden, weil dies dazu führt, dass Überläufe auftreten können, Ablagen voll sind usw.

Sobald der Sequenzzähler überläuft, kann die chronologische Reihenfolge nicht mehr gewährleistet werden. Es sind daher Logikmittel vorgesehen, durch welche veranlasst wird, dass, sobald ein Sequenzzähler überfließt, ein Dummi-Match auf den entsprechenden Queues durchgeführt wird, der zwar kein tatsächliches Ergebnis ergibt, aber das Alter aller Einträge um eins inkrementiert, worauf die Sequenzzähler ohne Probleme auf Null gesetzt werden können.

Wenn hingegen die Header eines Bereichs ihr Maximalalter erreichen, wird ein Ausnahme-Interrupt an die Host-CPU ausgegeben und alle Einträge werden an den Hauptspeicher übertragen. Gleichzeitig wird das Hardwarematching außer Kraft gesetzt, bis es softwareseitig wieder in Kraft gesetzt wird.

Für den Fall, dass die Header-Queue überläuft, wird eine weitere Verarbeitung hereinkommender Datenpakete, die auf die überfließende Queue zielen, gestoppt und die Host-CPU ebenfalls durch einen entsprechenden Interrupt informiert. Einlaufende Datenpakete werden dann stattdessen zum Hauptspeicher geleitet, bis der Header-Queue-Overflow von der Software bearbeitet wurde. Es werden, wie im Fall einer Überalterung der Header, alle Header in den Hauptspeicher geschrieben und ein Software-Header-Matching-Algorithmus ausgeführt. In jedem Fall kann dann das Hardwarematching durch die Software wieder in Kraft gesetzt werden. Es sei darauf hingewiesen, dass es möglich ist, diesen Fall durch geeignetes Scheduling und einen geeigneten Kontrollfluss softwareseitig zu verhindern.

Die vorstehenden Mechanismen bei Überalterung basieren auf einer softwareseitigen Behandlung des Problems und damit auch des Matchings. Um dies zu unterstützen, ist weiter ein Betrieb im Bypass-Modus ermöglicht. Falls eine Ausnahme aufgetreten ist, kann somit das Hardewarematching außer Kraft gesetzt und durch das Softwarematching ersetzt werden, wobei dann alle Header an eine Hauptspeicher-Queue gesandt werden, um das softwareseitige Matching durchzuführen. Dies wird als Bypass-Modus bezeichnet.

Gegebenenfalls kann softwareseitig auch entschieden werden, dass Header wieder in die Queues eingereiht werden und das Hardwarematching wieder in Kraft gesetzt wird, wobei zunächst alle Header in chronologischer Reihenfolge in die Queues geschrieben werden, während sowohl die Matcheinheit als auch gegebenenfalls einlaufender Netzverkehr noch geblockt sind, bis der normale Betrieb wieder aufgenommen werden kann. Zu beachten ist aber, dass bei dem beschriebenen Hardware-Dump die Einträge im Hauptspeicher nicht mehr geordnet sind, sondern softwareseitig durch Berücksichtigung der Sequenznummer und des Alters eine Neuordnung erfolgen muss.

Bei Neueinträgen während des Bypass-Modus muss zudem softwareseitig für eine Ordnung gesorgt werden, da diese nicht mehr mit einer gültigen Sequenz- und Altersinformation versehen sind.

Zusammenfassend werden also einlaufende, gesendete Empfangs- oder gesendete Sendenachrichten zur Tag-Match-Einheit übertragen. Die Verteilstufe bestimmt den Headertypus, bestimmt also, ob es sich um einen Sende- oder Empfangsvorgang handelt und leitet den Header an die entsprechenden Vergleichselemente weiter. Der Vergleich einlaufender Header gegen alle in den spezifischen Headerschlangen bereits vorhandenen Header wird parallel durchgeführt, wozu die spezifische Header-Queue des spezifischen MPI-Bereichs jeweils durchlaufen wird. Die chronologisch erste Übereinstimmung dieses Headers wird dem Auswahlmittel, das heißt den Time-Stamp-Match-Einheiten, durch Angabe des Zeitstempels dieses Headers mitgeteilt. Nachdem alle parallel arbeitenden (Match-)Elemente ihre Suche beendet haben, bestimmt das Auswahlmittel, das heißt die Zeitstempelvergleichseinheit unter den Übereinstimmungen jene mit dem ältesten Zeitstempel, worauf der entsprechende Header von der Matcheinheit abgerufen und an die IPE weitergeleitet wird. Falls keine Übereinstimmung gefunden wurde, wird der Header hingegen an die Lastausgleichseinheit weitergeleitet, die den Header in eine Headerablagequeue einschiebt, wobei während des Einschubs keine neuen Header von der Broadcaststufe übertragen werden.

Das vorstehend beschriebene Verfahren ermöglicht eine Kommunikation, die auch in hochparallelen Systemen, bei welchen typisch die Hinzufügung immer weiterer Prozessoren beziehungsweise Rechnereinheiten zu einer Verschlechterung der Ausführungszeiten führen kann, noch Verbesserungen bewirken kann. Die mit klassischen Protokollen und Hardware erforderlichen, typisch CPU-gesteuerten Eingriffe, durch welche eingehende und/oder ausgehende oder übertragene Daten umkopiert werden müssen, können vermieden werden. Dabei werden zunächst nicht vollständige, lange Nachrichten übertragen, sondern nur darauf bezogene Informationen, zum Beispiel die Header. Diese sind typisch signifikant kürzer als die vollständigen Nachrichten; demgemäß können die Queues kleiner ausfallen, weil nicht die vollständigen Informationen abgelegt werden müssen; es ist möglich, zum Beispiel durch den vorstehend beschriebenen Abgleich, eine Speicherstelle zu bestimmen, an welche eingehende (vollständige) Nachrichten geschrieben werden sollen und, gegebenenfalls auch automatisch, zu veranlassen, dass dorthin Daten gesandt werden; alternativ braucht jenem Prozess, der auf dem Host-Rechner die Daten verarbeiten soll, auch lediglich die Adresse der Daten auf dem fremden Rechner übermittelt zu werden; es wird so ein Remote-Memory-Access vorgesehen.

Erwähnt sei aber, dass es zwar vorteilhaft ist, insbesondere lange Nachrichten nicht vollständig mit in den Queues abzulegen, dass aber, selbst wenn dies der Fall sein sollte, das Vergleichsverfahren der vorliegenden Erfindung noch Vorteile bietet. Das Vergleichsverfahren der vorliegenden Erfindung ist somit insbesondere unabhängig von zum Beispiel dem Protokoll der Nachrichtenübertragung, der Anbindung der Schnittstelle an den Host-Rechner, der Anzahl der in der Schnittstelle vorhandenen Ein-/Ausgänge usw.

Es findet somit keine Verschwendung von Speicherbandbreite statt, sondern es wird ein Zero-Copy-Protokoll implementiert.

Zudem bietet die Erfindung den Vorteil der Skalierbarkeit, das heißt, dass ohne Zusatzaufwand eine Anpassung an wachsende Datenaustauschraten möglich ist, indem einfach mehr Ablagen parallel zueinander vorgesehen sind. Dies verkürzt die Länge der Listen, mit denen ein Vergleich vorgenommen werden muss, und verringert somit die Latenz massiv. Die für die zusätzlich zu den Vergleichen der Listeninhalte erforderlichen Zeiten sind dabei im Regelfall nicht besonders signifikant.

## Patentansprüche

1. Verbindungsschnittstelle
mit einer Schaltungsanordnung,
um
eingehende Datennachrichten
vorhandenen Informationen
zuzuordnen,
aufweisend
ein Mittel zum Ablegen vorhandener Informationen
und,
zum Vergleichen
der vorhandenen Informationen
mit
eingehenden Datennachrichten,
einer Vielzahl von Vergleichselementen,
denen
jeweilige Speicher,
die gemeinsam eine Ablage
zum Ablegen von
auf nichtzugeordnete Datennachrichten bezogene Informationen
bilden,
zugeordnet sind
und die
zum parallelen Vergleichen
von
eingehenden Nachrichten
mit
den in den jeweiligen Speichern abgelegten
Informationen
ausgebildet sind,
**dadurch gekennzeichnet, dass**
die Speicher
als Dual-Port-Memories ausgebildet sind
und
ihnen Schaltkreise
die dazu angeordnet sind,
bei Entnahme von Einträgen aus beliebigen Stellen
entstehende Lücken im Speicher
durch Zusammenschieben
des verbleibenden Speicherinhaltes
zu füllen,
direkt zugeordnet sind,
um so selbstkompaktierende Queues zu realisieren.

2. Verbindungsschnittstelle nach dem vorhergehenden Anspruch, **dadurch gekennzeichnet, dass** die den Dual-Port-Memories zugeordneten Schaltkreise dazu ausgebildet sind, zur Kompaktierung eines evtl. segmentierten Inhaltes über einen Port ausgelesene Daten über den zweiten Port zur Kompaktierung zurückzuschreiben.

3. Verbindungsschnittstelle nach einem der vorhergehenden Ansprüche, **dadurch gekennzeichnet, dass** die den Dual-Port-Memories zugeordneten Schaltkreise dazu ausgebildet sind, den Kompaktierungsprozess ohne Host-Rechner-Eingriff parallel zu einer Suche durchzuführen.

4. Verbindungsschnittstelle nach dem vorhergehenden Anspruch, die dazu ausgebildet ist, als eingehende Datennachrichten Header oder dergleichen von unerwarteten Vorgängen, die an die Verbindungsschnittstelle übertragen werden, oder von ausgehenden Anfragen einer Recheneinheit, die mit der Verbindungsschnittstelle verbunden ist, zu verarbeiten.

5. Verbindungsschnittstelle nach einem der vorhergehenden Ansprüche, **dadurch gekennzeichnet, dass** sie dazu ausgebildet ist, die Selbstkompaktierung unter simultaner Inkrementierung des Alters von Queue-Einträgen durchzuführen.

6. Verbindungsschnittstelle nach einem der vorhergehenden Ansprüche, **dadurch gekennzeichnet, dass** die Ablage dazu ausgebildet ist, als auf nichtzugeordnete Datennachrichten bezogene Informationen Datenheader, Kennungen, Teile davon und bevorzugt eine Sequenznummer, bevorzugt eine fortlaufend vergebene Sequenznummer, mitabzulegen.

7. Verbindungsschnittstelle nach einem der vorhergehenden Ansprüche, **dadurch gekennzeichnet, dass** ein Verteilungsmittel vorgesehen ist, um auf eingegangene, nichtzuzuordnende Datennachrichten bezogene Informationen auf einen der jeweiligen Speicher der Vielzahl von Vergleichselementen zu verteilen, bevorzugt unter Berücksichtigung einer Round-Robin-Strategie und/oder eines aktuellen Füllstandes von jeweiligen Speichern.

8. Verbindungsschnittstelle nach einem der vorhergehenden Ansprüche, **dadurch gekennzeichnet, dass** eine erste Vielzahl von Vergleichselementen vorgesehen ist, um unerwartet von außerhalb eingegangene Datennachrichten mit internen Datenanfragen, zu denen zuvor keine übereinstimmende eingehende Datennachrichten gefunden wurde, zu vergleichen und eine zweite Vielzahl von Vergleichselementen vorgesehen ist, um nach außen auszusendende Anfragen mit zuvor von außen erhaltenen, unerwarteten Vorgängen zu vergleichen und weiter ein Mittel vorgesehen ist, um eingehende Datennachrichten der entsprechenden ersten
oder zweiten Vielzahl von Vergleichselementen für Ablage beziehungsweise Vergleich zuzuordnen, um einen Vergleich nur auf dieser Vielzahl zu veranlassen.

9. Verbindungsschnittstelle nach einem der vorhergehenden Ansprüche, **dadurch gekennzeichnet, dass** eine Verteileinheit vorgesehen ist, um eine eingehende Datennachricht simultan an eine Mehrzahl von Vergleichselementen für den Parallelvergleich mit den in der jeweiligen Speichereinheit abgelegten Informationen zu speisen, wobei diese Verteileinheit bevorzugt dazu ausgebildet ist, neu eingehende Datennachrichten erst dann an die Mehrzahl von Vergleichselementen zu speisen, wenn alle abzulegenden Informationen abgelegt und über zuvor durchgeführte Vergleiche entschieden ist.

10. Verbindungsschnittstelle nach einem der vorhergehenden Ansprüche, **dadurch gekennzeichnet, dass** eine Einheit vorgesehen ist, um bei in mehreren der Mehrzahl von Vergleichselementen vorhandenen, eingehenden Datennachrichten zuzuordnenden Informationen die älteste Information als auszugebende Information auszuwählen, damit ein Transfer der entsprechenden Datenpaketübertragung veranlasst werden kann.

11. Verbindungsschnittstelle nach einem der vorhergehenden Ansprüche für eine Daten innerhalb eines Clusters austauschende Rechnereinheit, wobei die Schnittstelle eine Mehrzahl von Anschlüssen aufweist und zum Datenaustausch über jeden dieser Mehrzahl mit jeweils einer anderen Rechnereinheit ausgebildet ist, wobei bevorzugt zumindest vier, besonders bevorzugt sechs Anschlüsse daran vorgesehen sind, um eine Verbindung von jeweils zwei- oder dreidimensional angeordneten nächsten Nachbarn zu ermöglichen und/oder eine 3D-Torus- und/oder 6D-Hyper-kubustopologie zu realisieren,
und/oder wobei an jedem Anschluss eine von anderen Verbindungsschnittstellenkomponenten unabhängig betreibbare Datenübertragungsfehlerdetektionsstufe vorgesehen ist, um vor interner Datenpaketweiterleitung einen Datenübertragungsfehler zu detektieren und im Ansprechen auf detektierte Fehler eine Neuübermittelung zuvor fehlerhaft übertragener Datenpakete zu veranlassen, und/oder wobei die Schnittstelle dazu ausgebildet ist, kurze und lange Datenpakete unter Heranziehung unterschiedlicher Hardwareeinheiten auszutauschen,
und/oder die Schnittstelle dazu ausgebildet ist, unter Vorsehen einer Kurznachrichten übermittelnden Einheit kürzere Datenpakete an eine programmierbare Hardwarestelle zu senden, wobei bevorzugt reservierter Speicherplatz im Computerhauptspeicher zur Kurznachrichtenspeicherung für jeden einer Mehrzahl laufender Threads, besonders bevorzugt zumindest ein Speicherbereich für jeden laufenden Thread vorgesehen ist.

12. Verbindungsschnittstelle nach einem der vorhergehenden Ansprüche, **dadurch gekennzeichnet, dass**, bevorzugt zur Übermittlung längerer Datenpakete, eine Einheit vorgesehen ist, in welcher abgelegt ist, auf welchen entfernt liegenden Speicherbereich lesend und/oder schreibend zugegriffen werden soll, wobei die Einheit bevorzugt dazu ausgebildet ist, einen Hinweis auf die erfolgreichen Schreib- und/oder Leseoperationen und/oder einen Hinweis auf eine erfolglose Schreib- und/oder Leseoperation auszugeben,
und/oder dass eine Adressübersetzungseinheit zur Übersetzung zwischen lokalen bzw. physikalischen Adressen und globalen bzw. virtuellen Adressen vorgesehen ist, um den Zugriff auf entfernt liegende Speicherbereiche bei der Datenpaketübertragung zu erleichtern, bevorzugt durch Ermöglichung eines softwareeingriffsfreien Zugriffs zu erleichtern,
und/oder dass ein Crossbar-Schalter zur Verbindung verschiedener Einheiten in der Verbindungsschnittstelle vorgesehen ist und/oder dass ein Status- und/oder Registerfilemittel vorgesehen ist, um den Zustand der Verbindungsschnittstelle und/oder Einstellungen derselben auszulesen und/oder zu verändern und/oder dass eine Protokollkontroll- und/oder Übersetzungseinheit vorgesehen ist, bevorzugt zur Datenpaketzusammenführung und/oder zur Flusskontrolle, besonders bevorzugt zwischen dem Crossbar und zumindest einer der Einheiten Adressübersetzungseinheit, Status- und Registerfilemittel, Kurzdatenübermittlungseinheit und Datenpaketmarkenvergleichseinheit.

13. Verfahren zum Betreiben eines Clusters aus Rechnereinheiten, worin
jede einer Mehrzahl von Rechnereinheiten des Clusters
über eine Verbindungsschnittstelle,
welche eine Vielzahl von Vergleichselementen,
denen jeweilige Speicher,
die gemeinsam eine Ablage
zum Ablegen von
auf nichtzugeordnete Datennachrichten bezogene
Informationen
bilden
und die als Dual-Port-Memories ausgebildet sind,
zugeordnet sind,
aufweist,
mit anderen Rechnereinheiten des Clusters kommuniziert,
wobei
in der Verbindungsschnittstelle
eingehende Datennachrichten
mit vorhandenen Informationen
mittels der Vergleichselemente parallel verglichen
und Einträge aus beliebigen Stellen entnommen werden,
**dadurch gekennzeichnet, dass**
Daten
über den einen Port der Dual-Port-Memories
ausgelesen werden
und
über den anderen Port
ohne Host-Rechner-Eingriff
so zurückgeschrieben werden,
dass
bei Entnahme von Einträgen aus beliebigen Stellen im Speicher
entstehende
Lücken erforderlichenfalls geschlossen werden,
um
durch ein solches Zusammenschieben des verbleibenden Speicherinhalt
selbstkompaktierende Queues zu realisieren.

14. Verfahren nach dem vorhergehenden Anspruch, **dadurch gekennzeichnet, dass** der Austausch kurzer oder langer Datenpakete unterschiedlich gehandhabt wird, bevorzugt unter Übertragung längerer Datenpakete erst nach Übermittlung eines Zielspeicherbereichs für den Datenpaketzugriff in der Zielrechnereinheit.

15. Verfahren nach einem der beiden vorhergehenden Ansprüche, **dadurch gekennzeichnet, dass** als eingehende Datennachrichten Header oder dergleichen von unerwarteten Vorgängen, die an die Verbindungsschnittstelle übertragen werden, oder von ausgehenden Anfragen einer Recheneinheit, die mit der Verbindungsschnittstelle verbunden ist, verarbeitet werden.

16. Verfahren nach einem der vorhergehenden Verfahrensansprüche, **dadurch gekennzeichnet, dass** der Speicher die Selbstkompaktierung parallel zur Suche durchführt, bevorzugt unter simultaner Inkrementierung des Alters von Queue-Einträgen.

17. Verfahren nach einem der vorhergehenden Verfahrensansprüche, **dadurch gekennzeichnet, dass** zu nichtzugeordneten Nachrichten Datenheader, Kennungen, Teile davon und bevorzugt eine Sequenznummer, besonders bevorzugt eine fortlaufend vergebene Sequenznummer, mitabgelegt wird.

## Claims

1. Connecting interface having a circuit arrangement, in order to associate incoming data messages with available information, having a means for storing available information for comparing the available information with incoming data messages, and a multiplicity of comparison elements that have respective associated memories that together form a store for storing information relating to unassociated data messages, which comparison elements are designed for the parallel comparison of incoming messages with the information stored in the respective memories, **characterized in that** the memories are in the form of dual-port memories and they have directly associated circuits that are arranged for the purpose of filling gaps in the memory that arise when entries are removed from arbitrary locations by pushing together the remaining memory content, so as in this way to realize self-compacting queues.

2. Connecting interface according to the preceding claim, **characterized in that** the circuits associated with the dual-port memories are designed to compact a possibly segmented content by writing back data read via one port via the second port for compacting purposes.

3. Connecting interface according to either of the preceding claims, **characterized in that** the circuits associated with the dual port memories are designed to perform the compacting process without host computer intervention in parallel with a search.

4. Connecting interface according to the preceding claim, which is designed to process, as incoming data messages, headers or the like from unexpected operations that are transmitted to the connecting interface or from outgoing requests from a computation unit that is connected to the connecting interface.

5. Connecting interface according to one of the preceding claims, **characterized in that** it is designed to perform the self-compacting with simultaneous incrementation of the age of queue entries.

6. Connecting interface according to one of the preceding claims, **characterized in that** the store is designed to jointly store data headers, identifiers, portions thereof and preferably a sequence number, preferably a progressively allocated sequence number, as information relating to unassociated data messages.

7. Connecting interface according to one of the preceding claims, **characterized in that** a distribution means is provided in order to distribute information relating to received, unassociatable data messages to one of the respective memories from the multiplicity of comparison elements, preferably taking account of a round robin strategy and/or a current fill level of respective memories.

8. Connecting interface according to one of the preceding claims, **characterized in that** a first multiplicity of comparison elements is provided in order to compare data messages received unexpectedly from outside with internal data requests for which no matching incoming data messages have previously been found, and a second multiplicity of comparison elements is provided in order to compare requests that are to be transmitted to the outside with unexpected operations that have previously been obtained from the outside, and also a means is provided in order to associate incoming data messages with the relevant first or second multiplicity of comparison elements for storage or comparison in order to prompt a comparison only on this multiplicity.

9. Connecting interface according to one of the preceding claims, **characterized in that** a distribution unit is provided in order to supply an incoming data message simultaneously to a plurality of comparison elements for parallel comparison with the information stored in the respective memory unit, wherein this distribution unit is preferably designed to supply freshly incoming data messages to the plurality of comparison elements only when all the information to be stored has been stored and a decision about previously performed comparisons has been made.

10. Connecting interface according to one of the preceding claims, **characterized in that** a unit is provided in order to select the oldest information from information that is available in a plurality of the plurality of comparison elements and that can be associated with incoming data messages as the information to be output so that a transfer of the relevant data packet transmission can be prompted.

11. Connecting interface according to one of the preceding claims for a computer unit that interchanges data within a cluster, wherein the interface has a plurality of ports and is designed for data interchange via each of this plurality with a respective different computer unit, wherein preferably at least four, particularly preferably six, ports thereon are provided in order to allow connection of respective two-dimensionally or three-dimensionally arranged closest neighbors and/or to implement a 3D torus topology and/or a 6D hypercube topology,
and/or wherein a data transmission error detection stage that can be operated independently of other connecting interface components is provided on each port in order to detect a data transmission error prior to internal data packet forwarding and to prompt retransmission of previously erroneously transmitted data packets in response to detected errors, and/or wherein the interface is designed to interchange short and long data packets using different hardware units,
and/or the interface is designed to send shorter data packets to a programmable hardware location, by providing a unit that transmits short messages, with preferably reserved memory space in the computer main memory being provided for short message storage for each of a plurality of running threads, particularly preferably at least one memory area for each running thread.

12. Connecting interface according to one of the preceding claims, **characterized in that**, preferably for the purpose of transmitting longer data packets, a unit is provided that stores which remotely located memory area is intended to be accessed on a read and/or write basis, wherein the unit is preferably designed to output advice of the successful read and/or write operations and/or advice of an unsuccessful read and/or write operation,
and/or **in that** an address translation unit is provided for translating between local and physical addresses and global and virtual addresses in order to facilitate access to remotely located memory areas during the data packet transmission, preferably to facilitate this by allowing software-intervention-free access, and/or **in that** a crossbar switch for connecting various units is provided in the connecting interface and/or **in that** a status and/or register file means is provided in order to read and/or alter the state of the connecting interface and/or settings thereof and/or **in that** a protocol control and/or translation unit is provided, preferably for the purpose of data packet merging and/or for the purpose of flow control, particularly preferably between the crossbar and at least one of the units from address translation unit, status and register file means, short data transmission and data packet mark comparison unit.

13. Method for operating a cluster of computer units, wherein each of a plurality of computer units in the cluster communicates with other computer units in the cluster by means of a connecting interface that has a multiplicity of comparison elements that have respective associated memories that together form a store for storing information relating to unassociated data messages and that are in the form of dual-port memories, wherein incoming data messages in the connecting interface are compared in parallel with available information by means of the comparison elements and entries are removed from arbitrary locations, **characterized in that**
data are read via one port of the dual-port memories and are written back via the other port without host computer intervention such that gaps arising in the memory when entries are removed from arbitrary locations are closed if need be in order to realize self-compacting queues as a result of the remaining memory content being pushed together in this way.

14. Method according to the preceding claim, **characterized in that** the interchange of short or long data packets is handled differently, preferably by transmitting longer data packets only after transmission of a destination memory area for the data packet access in the destination computer unit.

15. Method according to either of the two preceding claims, **characterized in that** the incoming data messages processed are headers or the like from unexpected processes that are transmitted to the connecting interface, or from outgoing requests for a computation unit that is connected to the connecting interface.

16. Method according to one of the preceding method claims, **characterized in that** the memory performs the self-compacting in parallel with the search, preferably with simultaneous incrementation of the age of queue entries.

17. Method according to one of the preceding method claims, **characterized in that** data headers, identifiers, portions thereof and preferably a sequence number, particularly preferably a progressively allocated sequence number, are also stored for unassociated messages.

## Revendications

1. Interface de liaison avec un dispositif à circuit, en vue d'associer des messages entrants contenant des données à des informations existantes, laquelle interface de liaison présente :
- un moyen destiné à la mise en archive d'informations existantes et à la comparaison de ces informations existantes avec les messages entrants contenant des données ;
- une pluralité d'éléments de comparaison, auxquels sont associées des mémoires respectives, lesquelles forment en commun une archive destinée à la mise en archive d'informations qui se rapportent à des messages non classés contenant des données, lesquels éléments de comparaison sont conçus en vue de la comparaison en parallèle de messages entrants avec les informations archivées dans les mémoires respectives ;
**caractérisée en ce que**
les mémoires sont conçues sous la forme de mémoires à double accès (Dual Port Memories) et des circuits leur sont directement associés en vue de réaliser de la sorte des mises en attente (queues) permettant un compactage automatique des données, lesquels circuits sont disposés en vue de remplir les lacunes apparaissant dans la mémoire lors du prélèvement des entrées à partir de n'importe quel emplacement, en décalant le contenu restant de la mémoire.

2. Interface de liaison selon la revendication précédente, **caractérisée en ce que** les circuits associés aux mémoires à double accès sont conçus en vue de restaurer des données lues à des fins de compactage d'un contenu éventuellement segmenté sur un port, sur le deuxième port en vue du compactage.

3. Interface de liaison selon l'une des revendications précédentes, **caractérisée en ce que** les circuits associés aux mémoires à double accès sont conçus en vue de réaliser le processus de compactage en parallèle à une recherche, sans intervention de l'ordinateur hôte.

4. Interface de liaison selon la revendication précédente, laquelle est conçue en vue de traiter, sous la forme de messages entrants contenant des données, des en-têtes ou des données similaires de processus inattendus qui sont transmis à l'interface de liaison, ou de requêtes sortantes d'une unité de traitement qui est connectée à l'interface de liaison.

5. Interface de liaison selon l'une des revendications précédentes, **caractérisée en ce que** ladite interface de liaison est conçue en vue de réaliser le compactage automatique tout en procédant simultanément à l'incrémentation de l'ancienneté des entrées mises en attente.

6. Interface de liaison selon l'une des revendications précédentes, **caractérisée en ce que** l'archivage est conçu en vue de procéder à une mise en mémoire des en-têtes de données, des identifiants, des éléments de ceux-ci et de préférence un numéro de séquence, de préférence un numéro de séquence attribué de manière continue, sous la forme d'informations se rapportant à des messages non classés contenant des données.

7. Interface de liaison selon l'une des revendications précédentes, **caractérisée en ce qu'**un moyen de distribution est prévu en vue de répartir des informations se rapportant à des messages entrants contenant des données, lesquels ne doivent pas être classés, sur l'une des mémoires respectives de la pluralité d'éléments de comparaison, de préférence en tenant compte d'une stratégie de type « round robin » et/ou d'un niveau de remplissage actuel des mémoires respectives.

8. Interface de liaison selon l'une des revendications précédentes, **caractérisée en ce qu'**une première pluralité des éléments de comparaison est prévue en vue de comparer des messages entrants contenant des données, provenant de l'extérieur de manière inopinée, à des requêtes internes de données, pour lesquelles aucun message entrant, concordant, contenant des données n'a pu être trouvé précédemment ; et **caractérisée en ce qu'**une deuxième pluralité des éléments de comparaison est prévue en vue de comparer des requêtes devant être transmises vers l'extérieur à des processus inattendus, reçus au préalable de l'extérieur ; et **caractérisée en ce qu'**un moyen est en outre prévu en vue d'associer des messages entrants contenant des données à la première ou à la deuxième pluralité correspondante d'éléments de comparaison à des fins d'archivage, respectivement de comparaison, en vue de permettre une comparaison uniquement limitée à cette pluralité.

9. Interface de liaison selon l'une des revendications précédentes, **caractérisée en ce qu'**une unité de distribution est prévue en vue d'alimenter simultanément un message entrant contenant des données auprès d'une pluralité d'éléments de comparaison pour la comparaison en parallèle avec les informations archivées dans l'unité de mémoire respective ; dans laquelle cette unité de distribution est conçue, de préférence, en vue de n'alimenter des messages entrants contenant des données auprès de la pluralité des éléments de comparaison que lorsque toutes les informations devant être mises en mémoire ont été préalablement archivées et qu'une décision a déjà été prise au regard des comparaisons réalisées précédemment.

10. Interface de liaison selon l'une des revendications précédentes, **caractérisée en ce qu'**une unité est prévue en vue de sélectionner l'information la plus ancienne comme étant l'information à transmettre, dans le cas d'informations devant être associées à des messages entrants contenant des données qui existent dans plusieurs des pluralités d'éléments de comparaison, afin qu'un transfert de la transmission correspondante des lots de données puisse être initié.

11. Interface de liaison selon l'une des revendications précédentes pour une unité de traitement qui échange des données à l'intérieur d'un groupe de données (cluster) ;
dans laquelle l'interface présente une pluralité de connexions et est conçue en vue de l'échange de données par l'intermédiaire de chacune de ces pluralités de connexions avec respectivement une autre unité de traitement ; dans laquelle, de préférence, tout au moins quatre, en particulier, de préférence, six connexions sont prévues avec respectivement une autre unité de traitement, en vue de permettre une liaison des participants voisins suivants, lesquels sont disposés respectivement de manière bi- ou tridimensionnelle et/ou en vue de réaliser une topologie de type tore 3D et/ou de type hypercube 6D ;
et/ou
dans laquelle un palier de détection des erreurs dans la transmission des données est prévu au niveau de chaque connexion, lequel peut être exploité de manière indépendante par d'autres composants de l'interface de liaison, en vue de détecter une erreur dans la transmission des données avant le réacheminement interne des lots de données et en vue de procéder, en réponse aux éventuelles erreurs détectées, à une nouvelle transmission des lots de données qui ont été précédemment transmis de manière défectueuse ; et/ou dans laquelle l'interface est conçue en vue d'échanger des lots de données, lesquels peuvent être aussi bien courts que longs, en faisant appel à des unités différentes de matériel (hardware) ; et/ou l'interface est conçue en vue de transmettre des lots de données plus courts à un emplacement matériel programmable, en prévoyant une unité qui transmet des messages brefs ; dans laquelle, de préférence, une place de mémoire réservée est prévue dans la mémoire principale de l'ordinateur en vue de la mise en mémoire des messages brefs pour chacune des pluralités d'unités d'exécution (threads) en cours de fonctionnement, en particulier de préférence tout au moins une zone de mémoire pour chaque unité d'exécution en cours de fonctionnement.

12. Interface de liaison selon l'une des revendications précédentes, **caractérisée en ce que**, de préférence, une unité est prévue en vue de la transmission de lots de données d'une certaine longueur, dans laquelle unité est archivé à quelle zone de mémoire distante il convient d'accéder pour des opérations en écriture et/ou en lecture ; dans laquelle l'unité est conçue, de préférence, en vue de fournir une indication relative à la réussite des opérations en écriture et/ou en lecture et/ou en vue de fournir une indication relative à l'échec d'une opération en écriture et/ou en lecture ; et/ou
**caractérisée en ce que**, en vue de la traduction entre des adresses locales ou physiques, d'une part, et des adresses globales ou virtuelles, d'autre part, une unité de traduction des adresses est prévue en vue de faciliter l'accès à des zones de mémoire distantes lors de la transmission des lots de données, de préférence en rendant possible un accès exempt de toutes interventions logicielles ; et/ou **caractérisée en ce qu'**un commutateur à barres croisées (crossbar switch) est prévu en vue de la jonction de diverses unités dans l'interface de liaison ; et/ou **caractérisée en ce que** des moyens de fichiers de statut et/ou de fichiers de registres sont prévus en vue de lire et/ou de modifier l'état de l'interface de liaison et/ou des réglages de paramètres de ladite interface de liaison ; et/ou **caractérisée en ce qu'**une unité de vérification des protocoles et/ou une unité de traduction est ou sont prévues, de préférence en vue de la fusion des lots de données et/ou en vue de la vérification des flux, en particulier, de préférence, entre le commutateur à barres croisées et tout au moins l'une parmi les unités suivantes : une unité de traduction des adresses, un moyen de fichiers de statut et de fichiers de registres, une unité de transmissions des données courtes et une unité de comparaison des marques de lots de données.

13. Procédé destiné à faire fonctionner un groupe de données à partir d'unités de traitement ;
dans lequel chacune des pluralités d'unités de traitement du groupes de données communique avec d'autres unités de traitement du groupe de données par l'intermédiaire d'une interface de liaison, laquelle présente une pluralité d'éléments de comparaison, auxquels sont associées des mémoires respectives, lesquelles forment en commun une archive destinée à la mise en archive d'informations qui se rapportent à des messages non classés contenant des données et lesquelles sont conçues sous la forme de mémoires à double accès ;
dans lequel des messages entrants contenant des données sont comparés en parallèle à des informations existantes dans l'interface de liaison, au moyen des éléments de comparaison et des entrées sont prélevées à partir de n'importe quel emplacement ;
**caractérisé en ce que**
des données sont lues par l'intermédiaire de l'un des ports des mémoires à double accès et sont restaurées sans intervention de l'ordinateur hôte par l'intermédiaire de l'autre port, de telle sorte que lacunes qui apparaissent dans la mémoire lors du prélèvement de saisies réalisé à partir de n'importe quel point dans la mémoire sont obturées le cas échéant, en vue de réaliser des mises en attente permettant un compactage automatique des données, par l'intermédiaire d'un tel décalage du contenu restant de la mémoire.

14. Procédé selon la revendication précédente, **caractérisé en ce que** l'échange de lots de données est traité de manière différente selon que ces lots de données sont courts ou longs, de préférence en ne transmettant des lots de données plus longs qu'après la transmission d'une zone de mémoire cible pour l'accès aux lots de données dans l'unité de traitement cible.

15. Procédé selon l'une des deux revendications précédentes, **caractérisé en ce que** des en-têtes ou des données similaires de processus inattendus, lesquels sont transmis à l'interface de liaison, ou des requêtes sortantes d'une unité de traitement, laquelle est connectée à l'interface de liaison, sont traités sous la forme de messages entrants contenant des données.

16. Procédé selon l'une des revendications de procédé précédentes, **caractérisé en ce que** la mémoire réalise le compactage automatique en parallèle à la recherche, de préférence en procédant simultanément à l'incrémentation de l'ancienneté des entrées mises en attente.

17. Procédé selon l'une des revendications de procédé précédentes, **caractérisé en ce que** des en-têtes de données, des identifiants, des éléments de ceux-ci et de préférence un numéro de séquence, en particulier de préférence un numéro de séquence attribué de manière continue, sont mis en mémoire sous la forme de messages non classés.
